Europäisches Patentamt

European Patent Office

Office européen des brevets

(19)

(11) Publication number: 0 368 465

A1

(12) EUROPEAN PATENT APPLICATION

(21) Application number: 89310043.8

(22) Date of filing: 02.10.89

(51) Int. Cl.⁵: H04Q 9/14, H04L 12/10

(30) Priority: 18.10.88 GB 8824335

(43) Date of publication of application:
16.05.90 Bulletin 90/20

(84) Designated Contracting States:
DE FR IT

(71) Applicant: PLESSEY OVERSEAS LIMITED
Vicarage Lane
Ilford Essex IG1 4AQ(GB)

(72) Inventor: Beddoe, Stanley
6, Martin Avenue
Stubbington Fareham(GB)
Inventor: Ireland, Robert
59 High Street Bulford Village
Salisbury Wiltshire(GB)

(74) Representative: Fish, Norman Ernest
The Plessey Company plc Intellectual
Property Department Vicarage Lane
Ilford Essex IG1 4AQ(GB)

(54) Improvements relating to data transmission systems.

(57) A data transmission system for selectively controlling and/or monitoring from a central control station the condition of equipment at or associated with a plurality of remote stations, in which for the selective operation and/or monitoring of equipment at or associated with the respective remote station the central control station comprises means for generating coded command data words for transmission over a common data bus or link extending between the central control station and the remote stations, in which the remote stations comprise means for decoding coded data words and for generating status data words for transmission over said data link to the central control station, in which the data words each comprise a synchronising part and an encoded address and data part defined by bursts of A.C., and in which the respective remote stations each include an oscillator circuit which generates a continuous A.C. output signal of predetermined frequency (e.g. 100 to 200KHz) which serves on the one hand after rectification by rectifier means, to provide an isolated DC supply for data word receiver/decoding and transmitter/encoding means at the station concerned and which serves on the other hand to provide the basic AC signal for generating and transmitting coded status data words.

# IMPROVEMENTS RELATING TO DATA TRANSMISSION SYSTEMS

This invention relates to data transmission systems and relates more specifically to data transmission systems for selectively controlling and/or monitoring from a central control station the condition of power supply switching circuits or other equipment located at or associated with remote stations.

For the purpose of selectively controlling the operation of power supply switching circuits, for example, at the respective remote stations, data command signals generated at the control station for transmission over a common data bus or link (e.g. twisted cable pair) connecting the respective remote stations to the central control station, with the interposition of de-coupling/balancing transformers may each comprise a a two-part encoded data word, the first part defining a preamble or synchronising part and the second part including suitably encoded address and data information (e.g. command signal). The preamble or synchronising part which may comprise a stream of a.c. pulses transmitted over the common data link causes data word receiving and decoding means at each of the remote stations to respond by a phase locked loop thereof becoming synchronised in readiness for receiving and decoding the address and data information in the second part of the incoming data word. The particular remote station recognising the coded address as its own will then be suitably activated by the coded data which follows the address code whereas the other remote stations will not act on the coded data.

The coded data may for example include a command for a power switching circuit at the remote station to operate in order to supply power from a local power supply to a load circuit, or, alternatively, the command signal may simply require information regarding the condition or status of equipment at the remote station or associated therewith to be acquired and returned to the control station. When the power supply switching has been effected or the required data acquisition has taken place a transmitter at the remote station concerned will produce a status word for transmission back over the data bus link to the central control station. This status word may be of generally similar format to the data word transmitted by the central control station, that is to say it will comprise a preamble or synchronising part followed by an encoded address and data (status) part. However, the data (status) part of the word has hitherto included the address of the remote station transmitting the status word as well as the data (status) information.

The remote stations have also included DC-DC converters to provide isolated DC power supplies for operating circuitry for receiving/decoding and transmitting/encoding the aforesaid data words. These DC-DC converters have hitherto included oscillators or multi-vibrators and further oscillators have been provided for producing AC signals (e.g. 100 to 200KHz) contained by square-wave pulses forming the data words.

The present invention is directed to an improved data transmission system of the kind described enabling various economies and cost savings to be achieved.

According to the present invention there is provided a data transmission system for selectively controlling and/or monitoring from a central control station the condition of equipment at or associated with a plurality of remote stations, in which for the selective operation and/or monitoring of equipment at or associated with the respective remote stations the central control station comprises means for generating coded command data words for transmission over a common data bus or link extending between the central control station and the remote stations, in which the remote stations comprise means for decoding coded data words and for generating status data words for transmission over said data link to the central control station, in which the data words each comprise a synchronising part and an encoded address and data part defined by bursts of AC, and in which the respective remote stations each include an oscillator circuit which generates a continuous A.C. output signal of predetermined frequency (e.g. 100 to 200KHz) which serves on the one hand after rectification by rectifier means, to provide an isolated DC supply for data word receiver/decoding and transmitter/encoding means at the station concerned and which serves on the other hand to provide the basic AC signal for generating and transmitting coded status data words.

In carrying out the present invention the AC signal produced by the oscillator circuit may be applied to the rectifier means of the DC-DC converter through a de-coupling transformer which includes an additional secondary winding connected in a circuit for generating status data words under the control of a solid state switch (e.g. transistor) and coupled to the aforesaid data link through the de-coupling transformer appertaining to the remote station concerned.

The central control station may include means for setting its own address identity to correspond to that of any of the remote stations to which a command data word is transmitted. This enables the status information of the data word which will be transmitted back to the control station over the data link to be restricted strictly to status information and not to include the address of the remote station concerned as has heretofore been the practice, thereby reducing significantly the number of data bits required in the status data word so that the complexity and cost of the status data generating circuitry will be significantly reduced.

By way of example the present invention will now be described with reference to the accompanying drawings in which:

Figure 1 shows a block schematic diagram of a data transmission system for selectively operating and/or monitoring power supply switching circuits at a plurality of remote stations from a central control station;

Figure 2 shows a receiving/transmitting circuit arrangement provided at each of the remote stations of the system of Figure 1 in accordance with the present invention; and,

Figure 3 shows a circuit arrangement at the central control station which provides for the setting of the address identity of the control station to that of any of the remote stations to which command data words are transmitted.

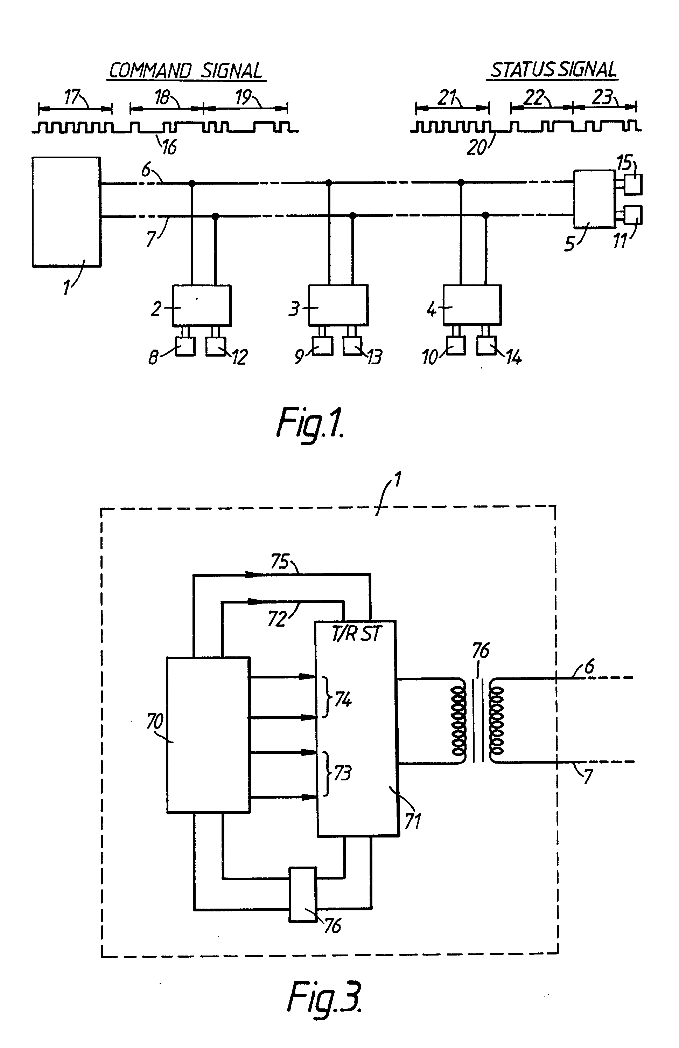

Referring to Figure 1 of the drawings this shows a relatively low speed data transmission system which comprises a central control station 1 which is connected to a number of remote stations 2, 3, 4 and 5 by means of a data bus link comprising a pair of conductors 6 and 7 which may be constituted by a twisted cable pair. The central control and remote stations are coupled to the data bus link by means of respective de-coupling and balancing transformers (not shown). In the present embodiment each of the remote stations 2 to 5 includes a power supply switching circuit (not shown) which controls the connection/disconnection of a local DC power supply to/from a load 12, 13, 14 or 15. The power supply switching circuit is itself powered from an isolated DC power supply derived from a local DC power supply 8,9, 10 or 11 through a DC-DC converter (not shown) and is arranged to be selectively controlled in accordance with a command data word transmitted over the data bus link 6, 7 from the central control station 1. The control station may itself include, or be controlled by, a computer programmed so as to produce a predetermined program for the operation of the load supply switching circuits at the respective remote stations 2 to 5.

For the purpose of selectively controlling (e.g. closing or opening) the load supply switching circuits the central control station produces appropriate command data words such as that shown at 16 in Figure 1. This data word includes a preamble or synchronising part 17 comprising bursts of AC contained within a series of square wave pulses. This preamble or synchronising part 17 is followed by a data part including an address 18 comprising encoded (Manchester code) bursts of AC and a command 19 also comprising encoded (Manchester code) bursts of AC within rectangular waveforms.

These command data words may be generated by the central control station 1 in accordance with a computer controlled operating program for the loads 12-15 associated with the respective remote stations 2-5.

Each command data word, such as the command data word 16, is applied to the data link 6,7 through a de-coupling and balancing transformer (not shown) and this word will be received by all of the remote stations 2-5 through de-coupling and balancing transformers at the respective remote stations. Each of these remote stations is provided with isolated DC supplies for operating the receiver/transmitter thereof by means of DC-DC converters connected to the DC supplies 8, 9, 10, and 11. The frequency of the preamble and address and data bits of the command words will be of the order of 6KHz to provide a relatively low speed transmission system.

The synchronising part 17 of the data command word 16 will cause a phase locked loop of clock pulse generating means of data decoding receiver means at the respective remote stations 2-5 to become synchronised to the pulse bit rate of the incoming data word. After such clock pulse synchronisation has been achieved the remote station address information 18 of the incoming data word 16 arrives at the data word decoding /receiving means of the respective remote stations and this address information will effectively be sampled by the receiver means at all of the remote stations. The receiver means at the remote station which recognises the address identity of the command data word 16 as its own will be activated in readiness for acting on the data information 19 which follows, whereas the receiver means of all the other remote stations will effectively remain inactive as regards response to the reception of the data information of the incoming data word.

The data information 19 will be acted on by the addressed remote station concerned by the connection to or disconnection from the load 12, 13, 14 or 15 of a local DC supply. The switching of the load to or from the local DC supply may be effected by means of a solid state switch (e.g. MOSFET).

When the particular instruction(s) of the command data word has been carried out at the addressed remote station 2, 3, 4 or 5 a status data word, such as the word indicated at 20, will be generated by transmitter means at the remote station concerned for transmission to the central control station 1 over the data bus link 6, 7 and the de-coupling transformers. This status data word comprises a synchronising part 21 for enabling clock pulse producing means at the central control station to become synchronised to the bit rate of the incoming station status data word. This synchronising part is followed by station address information 22 corresponding to the address of the remote station generating the status word and status information appertaining to equipment located at or associated with the remote station. The frequency of the preamble address and status bits will be of the order of 6KHz. As the command data word is generated by the central control station status word receiving/decoding means at the central control station 1 is conditioned in readiness for responding to a status word having the address of the particular remote station concerned. Thus each time a command word is generated by the central control station the address of the central control station will effectively correspond to each addressed remote station in readiness for receiving the status data word from such station when the latter has acted upon the command data word. This procedure obviates the need for the data information of the status data word to include the identity of the remote station, as when the central control station has the same address from all the remote stations and thereby facilitates a significant reduction in the number of data bits required in the data part of the status data word.

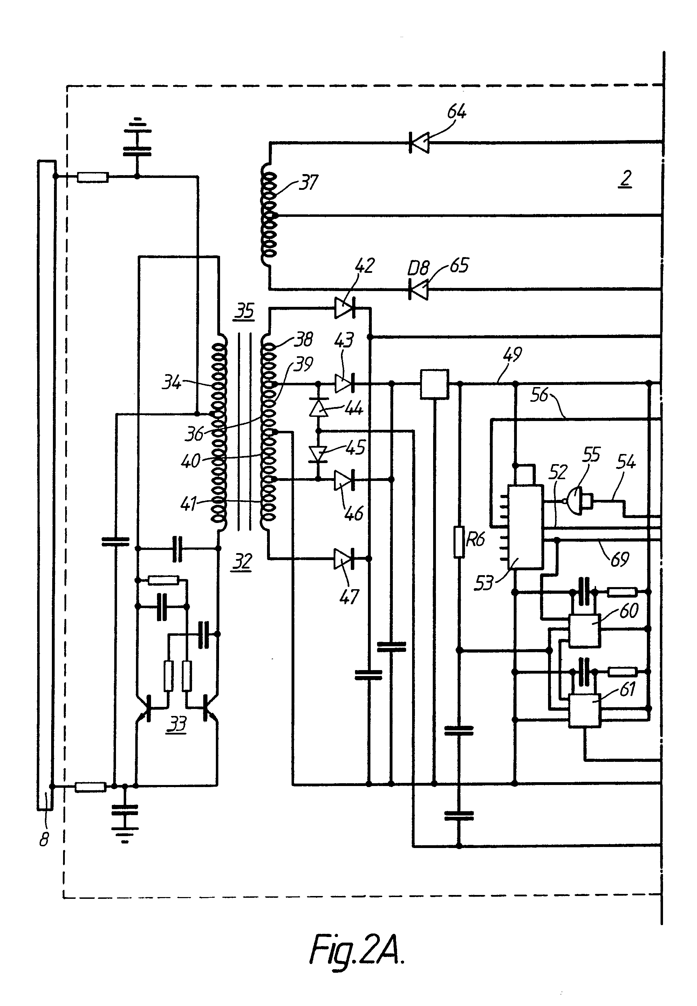

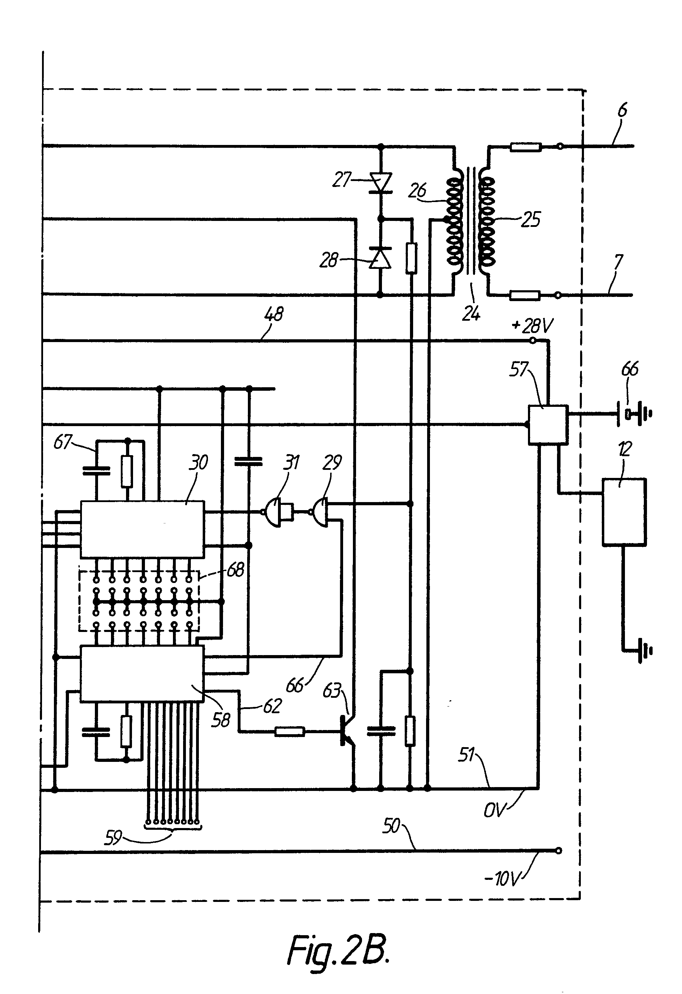

Referring now to Figure 2 of the drawings, this shows a receiver/transmitter circuit arrangement provided at each of the respective remote stations 2, 3, 4 and 5 in Figure 1. The designations used correspond to those used for the remote station 2 in Figure 1 coupled in common with the other stations to the central control station 1 over the data bus link 6, 7.

A command data word such as the word 20 ( Figure 1) generated by the central control station 1 and fed to the data bus link 6, 7 through a decoupling transformer (not shown) will be received by the station 2 through the de-coupling and balancing transformer 24 having an untapped winding 25 and centre-tapped winding 26. The centre-tapped winding 26 has connected across it a pair of oppositely- poled rectifiers 27, 28 the junction point between the rectifiers being connected to one input of a "NAND" gate 29 which during the reception of a command data word is open to allow the incoming word to pass through it to an integrated signal receiver decoder circuit 30 via an inverter 31 which effectively combines with the NAND gate 29 to define an "AND" gate. It may here be mentioned that during the transmission of status data words to the central control station this gate 29 will be closed to prevent the status word being received by the receiver/decoder 30. The receiver/transmitter circuit arrangement of Figure 2 is supplied with isolated DC power from the local DC power supply 8 through a DC-DC converter 32 comprising a conventional transistor oscillator 33 which is connected to the DC power supply 8 and which continuously produces AC output signals (100-200KHz) across the centre-tapped primary winding 34 of an isolating transformer 35 having two secondary windings 36 and 37. Secondary winding 36 is provided with a number of tapped portions 38, 39, 40 and 41 having rectifiers 42, 43, 44, 45, 46 and 47 suitably associated therewith to provide isolated DC voltages of plus 28V on line 48, plus 5V on line 49, minus 10V on line 50 and 0V on line 51 for the operation of the receiver/transmitter components. However, oscillator 33 not only forms part of the DC-DC converter 32 to provide isolated DC voltages for operating the receiver/transmitter circuit arrangement and controlling the operation of a switch 57 for connecting/disconnecting the load 12 to/from DC supply 66 but it also provides a continuous AC signal of 100-200KHz across the centre-tapped secondary winding 37 of the isolating transformer 35. This AC signal derived from the oscillator 33, is used in producing status data words as will hereinafter be fully described. Reverting now to the operation of the receiver 30, on arrival of the command data word the synchronising part 17 of word 16 causes a clock pulse circuit 67 for the circuit 30 to become synchronised with the bit rate of the synchronising part of the data word. The preamble or synchronising part is fed over line 52 into a shift register 53 which is stepped accordingly but latched to inhibit any output from the register at this stage. The following coded address of the data word is compared by the receiver 30 with a remote station address input at 68. The address code as passed over the line 52 to the shift register 53 which is stepped under control of clock pulses on line 54 but still remains latched. The command data bits of the word 16 also pass through the receiver 30 to the shift register 53 over the line 52 and the shift register again steps accordingly under control of clock pulses on line 54. If the address codes of the data word and remote station match, then the circuit 30 produces a strobe output on output line 69 which causes the shift register 53 to provide an output on line 56 by unlatching of register 53. If the address codes do not match then no strobe signal is applied to the shift register 53 for the unlatching thereof.

Assuming that the address codes match, the output from the shift register 53 in its final stepped position provides an output signal on the line 56 which is applied to a solid state switch (e.g.MOSFET) 57 which is switched on or off according to the command data information 19 from the central control station 1 (Figure 1). Assuming that the command data information is to connect the load 12 to the DC supply 66 then the switch 57 will be turned on by the plus 28 volt isolated supply on line 48. The shift register 53, however, will remain in the position to which it was finally stepped until the next command data word is received from the central control station over the data bus link 6, 7.

When the load 12 has been connected to or disconnected from the DC supply 66 a transmitter 58 having the on/off condition of the load 12 identified to it by a status input word applied to a group of status word terminals 59 will be activated after a predetermined time delay by means of an input signal from respective timing and pulse producing circuits 60 and 61. A pulse output corresponding to the load status and preceded by a series of pulses corresponding to a preamble and a series of pulses corresponding to the remote station address will accordingly be applied over line 62 to the base of a transistor 63 to render the transistor alternately conducting and non-conducting. When the transistor 63 conducts it effectively extends the 0 volt line 51 to the centre-tapping of the winding 37 of the isolating transformer 35 and by so doing it completes the circuit for the AC signal continuously applied to the centre-tapped winding 37 to be extended via the rectifiers 64 and 65 to the centre-tapped winding 26 of the de-coupling/balancing transformer 24. Bursts of the AC signal will accordingly be induced in the winding 25 of the de-coupling transformer and will be applied to the data bus link 6, 7. At the same time an inhibit output from the transmitter 58 on line 66 will close the gate 29 to prevent the status data word applied to the de-coupling transformer winding 26 from being fed back into the receiver 30 through the rectifiers 27, 28 the gate 29 and the inverter 31.

The status word applied to the data bus link 6,7 will be received by the central control station which will be provided with a receiver/transmitter generally similar to that indicated at 30 in Figure 2.

Referring now to Figure 3 this shows a circuit arrangement for the central control station which provides for the setting of address identity of the station to conform to that of any remote station to which a command word has been transmitted.

The central control station 1 includes a microprocessor 70 which will be programmed to provide an operational program for the supply switching circuits at the respective remote stations 2 to 5.

When the central control station is required to transmit a command data word to any of the remote stations the transmitter/receiver 71 is caused to assume the transmit mode by the application of a logic signal on the line 72. The address code 16 (see Figure 1) of the remote station concerned will be set up in the transmitter 71 by a code signal applied to the group of address lines 73. The command data or information will then be set up by code signals applied to the group of data lines 74 following which a start pulse will be applied to the transmitter 71 over line 75 to cause the control station 1 to transmit the appropriate command data word including a synchronising part over the data link 6, 7 via the de-coupling transformer 76. To achieve this the central control station may include an oscillator corresponding to the oscillator 33 of Figure 2 and associated in order to provide bursts of AC (100-200 KHz) for the generation of command data words.

After the expiration of a predetermined time interval the condition of the transmitter/receiver 71 is changed to the receive mode by a different logic signal on line 72 and thereafter the operation of the circuit 71 is similar to that of the receiver circuit 30 in Figure 2 with the associated shift register being shown at 76 for applying the received status data bits of a returned status word from the remote station to the microprocessor for monitoring and processing purposes. As in the case of the receiver 30 which compares the address of incoming data with its own address identity, address bits of the status word returned from the remote station will be compared with the address set up in the transmitter/receiver 71 when switched to the transmit mode before the shift register 76 is rendered operative for passing the incoming data bits to the microprocessor.

It will readily be appreciated that although in the specific embodiment described the command data words transmitted from the central control station control the operation of load supply switching circuits the present invention could alternatively, or additionally, be used to acquire data from the remote stations concerning the state of equipment located at or otherwise associated with the remote station.

## Claims

1. A data transmission system for selectively controlling and/or monitoring from a central control station the condition of equipment at or associated with a plurality of remote stations, in which for the selective operation and/or monitoring of equipment at or associated with the respective remote station the central control station comprises means for generating coded command data words for transmission over a common data bus or link extending between the central control station and the remote stations, in which the remote stations comprise means for decoding coded data words and for generating status data words for transmission over said data link to the central control station, in which the data words each comprise a synchronising part and an encoded address and data part defined by bursts of A.C., and in which the respective remote stations each include an oscillator circuit which generates a continuous A.C output signal of predetermined frequency (e.g. 100 to 200KHz) which serves on the one hand after rectification by rectifier means, to provide an isolated DC supply for data word receiver/decoding and transmitter/encoding means at the station concerned and which serves on the other hand to provide the basic AC signal for generating and transmitting coded status data words.

2. A data transmission system as claimed in claim 1, in which the A.C signal produced by the oscillator circuit is applied to the rectifier means of a DC-DC converter through a de-coupling transformer which includes an additional secondary winding connected in a circuit for generating status data words under the control of a solid state switch (e.g. transistor) and coupled to the data link through the decoupling transformer appertaining to the remote station concerned.

3. A data transmission system as claimed in claim 1 or claim 2, in which the central control station includes means for setting its own address identity to correspond to that of any of the remote stations to which a command data word is transmitted whereby the status information of the data word which will be transmitted back to the control station over the data link need not include the address of the remote station concerned.

EP 0 368 465 A1

Fig.1.

Fig.3.

Fig.2A.

Fig.2B.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 553 950 (RULL CIUTAT) * Page 1, line 21 - page 4, line 15; figures 1-3 * | 1 | H 04 Q 9/14 H 04 L 12/10 |
| A | US-A-3 854 122 (CROSS) * Column 2, line 34 - column 3, line 21; figures 1,2 * | 1 | |
| A | EP-A-0 171 470 (NIXDORF COMPUTER) * Page 6, line 9 - page 8, line 2; claims 1,2,8,9; figure 1 * | 1,2 | |
| A | IBM TECHNICAL DISCLOSURE BULLETIN, vol. 24, no. 7A, December 1981, pages 3510-3511; C. GERGAUD: "In-house data bus" * Whole document * | 1,3 | |
| A | GB-A-2 188 818 (THE PLESSEY CO.) * Whole document * | 1 | |
| | | | TECHNICAL FIELDS SEARCHED (Int. Cl.5) H 04 L H 04 Q |

The present search report has been drawn up for all claims

| Place of search | Date of completion of the search | Examiner |
|---|---|---|
| THE HAGUE | 21-02-1990 | WANZEELE R.J. |